# EUROPÄISCHE PATENTSCHRIFT

(11) **EP 1 393 082 B1**
(45) Veröffentlichungstag und Bekanntmachung des Hinweises auf die Patenterteilung: **30.05.2007**
(21) Anmeldenummer: 02738033.6
(22) Anmeldetag: 06.05.2002
(51) Int. Cl.: G01P 3/489

(54) **RADDREHZAHLSENSORANORDNUNG MIT ÜBERTRAGUNG VON ZUSATZINFORMATIONEN**
WHEEL SPEED SENSOR ARRANGEMENT WITH TRANSMISSION OF ADDITIONAL INFORMATION
ENSEMBLE CAPTEUR DE VITESSE DE ROUE AVEC TRANSMISSION D'INFORMATIONS SUPPLEMENTAIRES

(30) Priorität: 10.05.2001 DE 10122807; 30.01.2002 DE 10203483
(43) Veröffentlichungstag der Anmeldung: 03.03.2004
(73) Patentinhaber: Continental Teves AG & Co. oHG, 60488 Frankfurt (DE)
(72) Erfinder: LOHBERG, Peter, 61381 Friedrichsdorf (DE)
(86) Internationale Anmeldenummer: PCT/EP2002/004945
(87) Internationale Veröffentlichungsnummer: WO 2002/090999

(56) Entgegenhaltungen:
- EP-A- 1 074 843
- WO-A-98/09173
- WO-A-99/49322
- DE-A- 3 615 463
- DE-A- 19 650 935
- DE-A- 19 811 095
- US-A- 6 104 722

## Beschreibung

Die Erfindung betrifft eine Anordnung gemäß Oberbegriff von Anspruch 1, einen Radrehzahlsensor nach Anspruch 11 und ein Steuergerät nach Anspruch 12.

Aus der Internationalen Patentanmeldung WO 98/09173 (P 8775) ist ein aktiver Raddrehzahlsensor zur Übertragung der Drehzahlinformation eines Kraftfahrzeugrades an das elektronische Steuergerät einer Bremsanlage bekannt. Das Raddrehzahlsignal wird über eine Stromschnittstelle an das Steuergerät in Form von Rechteckimpulsen übertragen, deren Abstände bei steigender Drehzahl abnehmen. Der über die Schnittstelle übertragene Strom stellt gleichzeitig die elektrische Energieversorgung für den aktiven Sensor dar, so daß lediglich zwei Leitungen zur Verbindung von Sensor und Steuergerät benötigt werden. Der Sensor besitzt eine Einrichtung, mit der neben dem Raddrehzahlsignal auch für das Antiblockiersystem benötigte Zusatzinformationen, beispielsweise über den Bremsbelagverschleiß, die Drehrichtung oder den Luftspalt, übertragen werden können.

Die Raddrehzahl wird bei diesen bekannten Raddrehzahlsensoren in Form von Rechteckimpulsen übertragen, deren Abstand ein Maß für die Drehzahl ist. Es hat sich gezeigt, daß die vorstehend beschriebene Sensoranordnung den Nachteil hat, daß sich mit zunehmender Fahrgeschwindigkeit bzw. Raddrehzahl die Anzahl der übertragbaren Zusatzinformation auf Grund einer abnehmenden Pulspausenlänge und damit verbundenen Kanal- bzw. Bit-weise abnehmenden Kanalzahl vermindert.

Üblicherweise wird bei Personenkraftfahrzeugen mit Blockierschutzsystemen die Raddrehzahl mittels Magnetsensoren erfaßt, welche mit am Radlager befestigten rotierenden Encodern in Wechselwirkung stehen. Wenn beispielsweise in einer üblichen Serienkonfiguration eines solchen Systems der Radumfang 2 m und die Encoder-Winkelauflösung 96 Inkremente pro Radumlauf beträgt, so lassen sich zwischen den Raddrehzahlimpulsen 9 Kanäle bzw. Bits bis zu einer Geschwindigkeit von 135 km/h übertragen. Zu höheren Geschwindigkeiten hin kann bei 150 km/h, 165 km/h, 180 km/h, 210 km/h, 240 km/h und 300 km/h jeweils ein Kanal weniger übertragen werden, so daß bei 300 km/h nur noch 3 Kanäle für die Übertragung von Zusatzinformation zur Verfügung stehen. Die restlichen Kanäle werden demzufolge abgeschnitten. Es wurde bisher in Kauf genommen, daß Zusatzinformationen im abgeschnittenen Teil nur unterhalb einer zugehörigen Grenzgeschwindigkeit verfügbar sind. Es ist daher sinnvoll, den abgeschnittenen Kanälen solche Informationen zuzuordnen, welche für den Betrieb des Kraftfahrzeug nicht unbedingt erforderlich sind (z.B. Komfortfunktionen, wie Bremsbelagverschleiß etc.).

Aufgabe der vorliegenden Erfindung ist es, eine Anordnung mit einem Raddrehzahlsensor vorzuschlagen, bei der nicht in bestimmten Fahrsituation auf einen Teil von Zusatzinformationen verzichtet werden muß.

Diese Aufgabe wird durch die Anordnung nach Anspruch 1 gelöst.

Mit der Anordnung gemäß der Erfindung wird dem Bedarf nachgekommen, je nach Fahrzustand bestimmte Zustandsinformationen abfragen zu können, unabhängig von der Fahrgeschwindigkeit.

In einem Betriebsmodus sind bestimmte Zusatzinformationen einem bzw. mehreren festen Kanälen zugeordnet. Es ist zweckmäßig, wenn die Zuordnung der zu übertragenden Informationen auf die einzelnen Kanäle nach hierarchischen Gesichtspunkten erfolgt.

Die Anordnung nach der Erfindung dient zur gleichzeitigen Übertragung von Raddrehzahl- und wechselnder Zusatzinformation in Fahrzeugen unter Verwendung sogenannter aktiver Sensoren, also Sensoren, die zu ihrem Betrieb mit elektrischer Energie versorgt werden müssen. Bevorzugt werden diese Sensoren in Kraftfahrzeuge eingesetzt, insbesondere in Kraftfahrzeugen mit elektronisch geregelten Bremssystemen, wie z.B. ABS, ESP etc. Die Sensoren gemäß der Erfindung lassen sich auch für die Messung von Winkel- oder Ortsverschiebungen, bei denen Zusatzinformation übertragen werden sollen, einsetzen, wie z.B. in Winkelsensoren oder Wegsensoren.

Erfindungsgemäß wird nun so verfahren, daß nach definierten Zustands- und/oder Steuerkriterien das Kodier-Format und/oder die Bit-Breite der Zustandsinformation mit dem Ziel umgeschaltet wird, die mit der Fahrgeschwindigkeit (Raddrehzahl) veränderliche übertragbare Anzahl von Kanälen einer Zusatzinformation dem temporären Informationsbedarf des Regelsystems anzupassen.

Die Anpassung erfolgt mittels einer im Sensor enthaltenen Einrichtung zur Modusumschaltung.

Die Umschaltung kann ganz allgemein in Abhängigkeit von einem oder mehreren der folgenden Kriterien erfolgen, wobei auch mehrere Kriterien gleichzeitig möglich sind:
A) Ausgewählte Fahrzustände des Kraftfahrzeugs, insbesondere solche, die durch den Raddrehzahlsensor selbst abgeleitet werden können, wie Raddrehzahl, Stillstand des Fahrzeugs, Größe des Drehwinkels bzw. der Anzahl der Impulse des Encoderrades, Drehrichtung,
B) Timergesteuert, z.B. durch ein Zeitschema (z.B. Timer und/oder Kalender) veranlaßt, insbesondere in Verbindung mit einem selbsttätigen Umschalten des Sensors oder einem durch das Steuergerät veranlaßten Umschalten (letzteres ist erfindungsgemäß),
C) Umschaltaufforderung durch das Steuergerät (erfindungsgemäß),
D) Wertänderung in einem oder mehreren Übertragungskanälen für eine Zusatzinformation, z.B. bei Veränderung eines Bits oder einer Bitkombination der Zusatzinformation,
E) Änderung der magnetischen Feldstärke am Raddrehzahlsensor, z.B. hervorgerufen durch Luftspaltänderung oder Magnetdefekte, insbesondere bei einer Grenzwertüberschreitung einer Luftspaltveränderung unter dynamischer Verformung bei Querbeschleunigung des Fahrzeuges,
F) Signaländerung an einem oder mehreren Zusatzsignaleingängen des Raddrehzahlsensors, z.B. bei Veränderung eines Status-Bits, wenn ein seriell zu übertragendes Datenwort bzw. eine Wortfolge am Eingang des Raddrehzahlsensors anliegt oder bei Veränderung einer Signalfrequenz bzw. Baudrate,
G) Änderung eines internen elektrischen Betriebsmodus des Raddrehzahlsensor, z.B. bei Umschaltung von Initialmodus zu Regelmodus oder bei Erkennung einer Versorgungsspannungsunterschreitung.

Durch die vorstehend aufgeführten Kriterien kann somit eine Umschaltung des Übertragungsmodus des Raddrehzahlsensors bewirkt werden. Im einfachsten Fall sind beispielsweise zwei oder mehrere Übertragungsmodi vorgesehen, die sich lediglich durch die Zuordnung der Zusatzinformation zu den jeweiligen Signalkanälen voneinander unterscheiden.

Wenn über die Signalkanäle ein digital kodierter Analogwert, wie zum Beispiel die Feldstärke im Luftspalt, übertragen werden soll, kann es zweckmäßig sein, den analogen Meßwert, nach dem Umschalten in einen anderen Modus mit einer gegenüber der standardmäßigen Auflösung erhöhten Auflösung übertragen wird.

Bevorzugte Ausführungsformen ergeben sich aus den Unteransprüchen.

Weitere vorteilhafte Ausführungsformen der Erfindung ergeben sich aus der nachfolgenden Figurenbeschreibung.

Es zeigen
- Fig. 1: in schematischer Darstellung eine sensorische Anordnung zur Erfassung der Raddrehzahl nach dem Stand der Technik,
- Fig. 2: ein Datenprotokoll eines aktiven Raddrehzahlsensors nach dem Stand der Technik,
- Fig. 3: eine Sensoranordnung nach der Erfindung mit extern gesteuertem Protokollwechsel in schematischer Darstellung und
- Fig. 4: eine erfindungsgemäße Sensoranordnung mit intern gesteuertem Protokollwechsel.

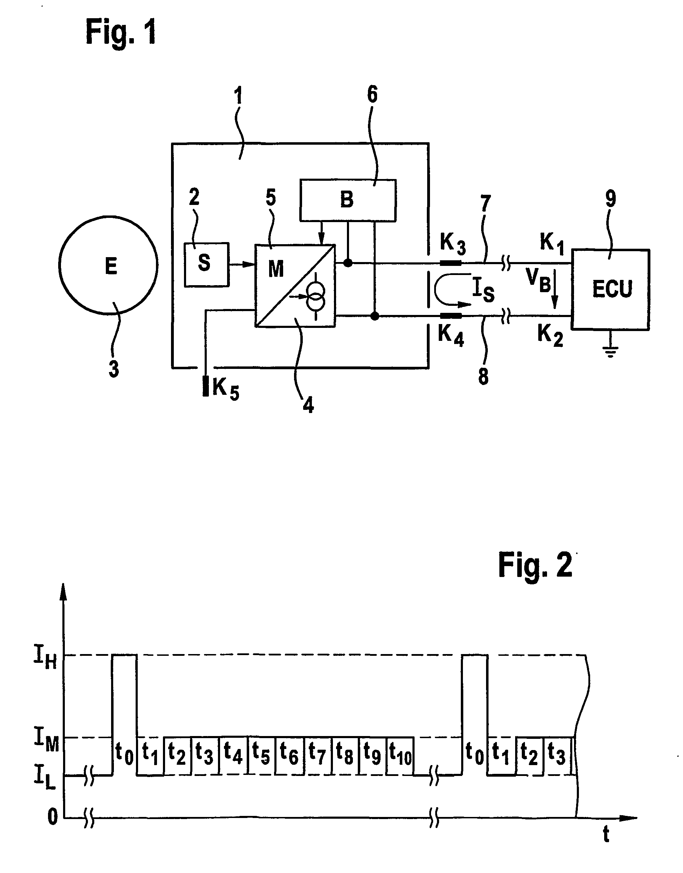

Die Funktionsweise der bereits Eingangs erwähnten Internationalen Patentanmeldung WO 98/09173 (P 8775) wird nachfolgend an Hand von Fig. 1 erläutert. Sensormodul 1 und elektronisches Steuergerät 9 (ECU) zur Steuerung einer Kraftfahrzeugbremsanlage sind über eine zweiadrige Leitung 7,8 miteinander verbunden, welche gleichzeitig zur Datenübertragung und zur Spannungsversorgung des Sensormoduls 1 dient. Betriebsspannung V_{B} , welche an Klemmen K₁, K₂ des Steuergeräts anliegt, ruft einen Signalstrom I_{S} über Leitung 7,8 hervor, welcher nach Maßgabe der zu übertragenden Informationen durch Modulator 5 und Stromquelle 4 moduliert wird. Zur Übertragung der Raddrehzahl ist ein ringförmiger, permanentmagnetisch magnetisierter Encoder 3 mit dem Rad verbunden, welcher von Sensorelement 2 abgetastet wird. Bei einem Wechsel der Polrichtung des durch den magnetoelektrischen Wandler 2 erfaßten Magnetfeldes wird ein Stromimpuls erzeugt, so daß bei einer bestimmten Rotationsgeschwindigkeit ein periodisches Rechtecksignal (Fig. 2) entsteht, bei dem der Abstand der Impulse von der Drehzahl abhängt. In den Impulspausen zwischen den Raddrehzahlimpulsen können weitere Strommodulationen zur Übertragung von einer oder mehrerer zusätzlicher Informationen neben der Raddrehzahl (Zusatzinformationen) hervorgerufen werden.

Encoder 3 kann ebensogut ein Zahnrad aus Stahl sein oder ein magnetisiertes Impulsrad, das über einen Luftspalt magnetisch an den eigentlichen magnetoelektrischen Wandler 2 (z.B. magnetoresistive Brücke) innerhalb des Sensors 1 gekoppelt ist.

Zum Aufprägen von Zusatzinformationen umfaßt Sensormodul 1 Beobachtungsschaltung 6, welche mit Signalleitungen 7,8 verbunden sind. Beobachtungsschaltung 6 nimmt über Leitungen 7,8 Informationssignale auf und entscheidet in Abhängigkeit von diesen Signalen über die Akzeptanz oder Verarbeitung der über Zusatzanschluß K₅ zugeführten Information, Impulse oder Signale. Beobachtungsschaltung 6 wirkt zu diesem Zweck ebenfalls auf Modulator 5 und Stromquelle 4.

Ein an sich bekanntes Protokoll zur Übertragung der Sensordaten an ein Steuergerät geht aus der DE-A 199 11 774 (P 9352) hervor. Dieses bekannte Protokoll wird nachfolgend an Hand von Fig. 2 erläutert. Im Zeitraum t₀ wird ein Signalimpuls, welcher einen Encoderübergang repräsentiert, mit der Amplitude I_{H} erzeugt. Nach Ablauf der Zeit t₀ fließt der Strom I_{L} > 0 für die Zeitdauer t₁. Im Anschluß daran werden die bereits weiter oben beschriebenen Zusatzsignale dem Sensorsignal aufmoduliert. Diese Zusatzsignale sind bevorzugt in Form von einzelnen Bits digital kodiert. Im dargestellte Beispiel werden 9 Bit übertragen. Werden zum Beispiel nur Statusbitinformationen, wie "An/Aus", "Bremsbelag verbraucht/nicht verbraucht" etc., übertragen, stehen neun Übertragungskanäle zur Verfügung. Die einzelnen übertragenen Bits werden mit t₂ bis t₁₀ bezeichnet. Die Impulse der einzelnen Zusatzinformation können je nach dem, ob es sich um eine "1" oder "0" handelt, entweder die Amplitude I_{M} oder I_{L} haben. Es ist aber auch möglich und erfindungsgemäß bevorzugt, die Daten nach dem an sich bekannten Manchester-Code zu kodieren, nach welchem die Unterscheidung zwischen einer "1" und einer "0" nicht durch die Amplitude, sondern durch den Anstieg oder Abfall einer Impulsflanke festgelegt ist.

Wie bereits erwähnt, können die in den Pausen der Raddrehzahlpulse zu übertragenden Informationen unterschiedlichster Art sein. Es ist bekanntlich möglich, jedem Bit eine einzelne Status-Information zuzuordnen, beispielsweise ist dann eine "1" an der mit t₂ bezeichneten Position ein Maß dafür, daß der höchstzulässige Luftspalt überschritten worden ist. Es ist dabei in der Fahrzeugindustrie üblich, die Zuordnung der einzelnen Bits zu bestimmten Informationen zu standardisieren, so daß beispielsweise Radsensoren unterschiedlicher Hersteller untereinander ausgetauscht werden können. Nach einem heute üblichen Standard wird aus dem in der Praxis z.B. auf maximal 9 Bits begrenzten zur Verfügung stehenden Übertragungsbereich ein erster Teil von beispielsweise 5 Bits (t2 bis t6) für die Übertragung von einzelnen Statussignalen genutzt. Die restlichen Bits t₇ bis t₁₀ dienen zur Übertragung eines Analog/Digital-gewandelten Analogwertes mit der Wortbreite 4 Bit. Bei diesem Analogwert kann es sich zum Beispiel um die sensorintern gemessene magnetische Luftspaltfeldstärke handeln. Ein solcher Sensor hätte dann 7 Kanäle für Informationen.

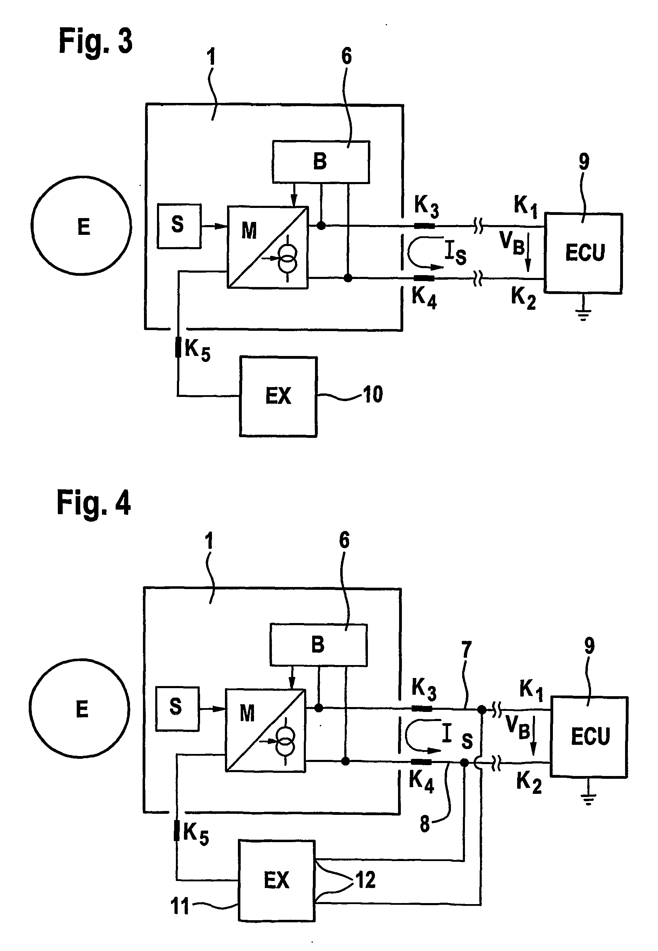

Fig. 3 zeigt in schematischer Darstellung ein nicht erfindungsgemäßes Anwendungsbeispiel eines Sensors mit einem Umschaltmittel 10 für einen extern gesteuerten Protokollwechsel. Bevorzugt handelt es sich bei dem Umschaltmittel um ein externes Gerät, z.B. eine autonome Warneinrichtung, einen Zeitgeber oder einen Grenzwertgeber, welcher eine Umschaltung mit Eintreten des Kriteriums einer Warnmeldung vornimmt. Gerät 10 ist über Leitung K₅ mit dem Sensormodul 1 verbunden. Bevorzugt liegt an k₅ ein binäres Statussignal an. In Abhängigkeit vom Grenzwertgeber wird von Gerät 10 ein "high"-Pegel an k₅ angelegt, welcher für die Dauer der akuten Warnsituation, der festen Zeitspanne, der Dauer einer Grenzwertüberschreitung etc. die Umschaltung des Protokolls vornimmt. Nach der Umschaltung in den Umschaltmodus werden beispielsweise alle verfügbaren Bits t₂ bis t₁₀ zur Übertragung der aktuellen Luftspaltfeldstärke herangezogen. Hierdurch kann durch das Steuergerät auch der zeitliche Verlauf der Luftspaltfeldstärke mit erhöhter Auflösung verfolgt und ggf. weiter ausgewertet werden.

Wird gemäß einem nicht erfindungsgemäßen Beispiel eine Umschaltung in Abhängigkeit von der Raddrehzahl vorgenommen, ist es möglich, die Meßauflösung im Sensor ständig der übertragbaren Anzahl von Bits anzupassen. In Steuergerät 9 kann auf diese Weise über eine Auswertung des empfangenen Drehzahlsignals jeweils auf den Betriebsmodus des Sensors geschlossen werden.

Gemäß einem erfindungsgemäßen Beispiel zur Nutzung der Protokollumschaltung des Sensors wird eine Modusumschaltung durch Aufforderung des Steuergeräts veranlaßt. Zur Triggerung der Umschaltung von Sensor 1 senkt Steuergerät 9 die Betriebsspannung V_{B} in definierter Weise ab, insbesondere entsprechend eines pulsförmig kodierten Spannungsmusters. Die Absenkung kann z.B. auf eine Spannung unterhalb der minimalen Betriebsspannung des Raddrehzahlsensors erfolgen. Beobachterschaltung 6 umfaßt hierzu zusätzlich eine nichtgezeichnete Dekodierstufe, welche das durch das Steuergerät hervorgerufene Spannungsmuster dekodiert und in Abhängigkeit dieses Musters die Modusumschaltung hervorruft. Auf Gerät 10 kann in der Ausführungsform gemäß dem an dieser Stelle beschriebenen Beispiel verzichtet werden. Die beschriebene Methode eignet sich auch zum Zurücksetzten extern gesteuerter Protokollwechsel, insbesondere aber auch zur Protokollsteuerung nach fahrdynamischen Erfordernissen.

Fig. 4 zeigt entsprechend einem weiteren erfindungsgemäßen Beispiel einen Raddrehzahlsensor entsprechend Fig. 3, allerdings mit intern gesteuertem Protokollwechsel. Ein externer Signalgeber 11, z.B. ein zusätzlicher Sensor oder Signalspeicher mit digitalem Ausgang ist über eine elektrische Leitung mit Anschluß K₅ verbunden und speist hierüber eine längere Bitfolge-Sequenz in Sensorelement 1 ein mit dem Zweck, daß diese Information als Zusatzinformation zur Raddrehzahlinformation in möglichst kurzer Zeit an das Steuergerät übertragen wird. Externer Signalgeber 11 besitzt hierzu zusätzliche Eingänge 12, welche mit Leitungen 7,8 elektrisch verbunden sind. Signalgeber 11 kann bevorzugt zusätzlich eine weitere, nichtgezeichnete Beobachtungsschaltung umfaßen, welche der Funktionsweise der bereits beschriebenen Beobachtungsschaltung 6 weitgehend entspricht. Signalgeber 11 detektiert zunächst das impulskodierte Absenken von Betriebsspannung V_{B}, welche durch Steuergerät 9 hervorgerufen wird. Sensorelement 1 wird auf diese Weise durch Steuergerät 9 zur Sendung der Signalgebernachricht aufgefordert. Die Erkennung der Umschaltung durch Sensorelement 1 erfolgt dabei in der weiter oben im Zusammenhang mit Fig. 3 beschrieben Weise.

Wenn der Bedarf besteht, Analogwerte mit einer Auflösung von mehr als 9-Bits zu übertragen, kann gemäß einer weiteren bevorzugten Ausführungsform mittels der vorstehend beschriebenen Anordnung eine Aufteilung eines gewandelten Analogwertes in zwei oder mehrere Teilworte vorgenommen werden. Die Teilworte werden dann, insbesondere aufeinanderfolgend, zwischen den Raddrehzahlimpulsen übertragen. Besonders effektiv ist die Übertragung, wenn die Bitlänge der Teilwörter und die Bildung der Teilwörter ständig zum Zwecke eienr möglichst zügigen Datenübertragun an die verfügbare Pausenlänge angepaßt wird.

Im vorstehend beschriebenen Beispiel wurde das Umschalten des Protokolls vom Steuergerät durch Absenken der Betriebsspannung des Sensors ausgelöst. In einem weiteren nicht erfindungsgemäßen Ausführungsbeispiel wird das Protokoll gemäß Fig. 2 durch den Sensor 1 selbsttätig so gesteuert, daß mit dem Umschalten des Protokolls ein oder mehrere Bits im Protokoll dazu verwendet werden, Steuergerät 9 zu signalisieren, welches Protokollmuster gerade verwendet wird. Vorzugsweise werden zur Anzeige des gerade verwendeten Protokollmusters solche Bits verwendet, welche am Anfang einer Übertragungsfolge, z.B. in den Zeiträumen t₂, t₃, liegen. Wie bereits gesagt, werden diese am Anfang einer Folge übertragenen Bits auch bei hohen Kraftfahrzeuggeschwindigkeiten nicht abgeschnitten. Bei Verwendung der Bits t₂ und t₃ können vier verschiedene Sensormodi (Protokolle) voneinander unterschieden werden.

In einem weiteren erfindungsgemäßen Ausführungsbeispiel ist ein Betriebsmodus vorgesehen, welcher alle verfügbaren Bits der Zusatzinformation einem einzigen Analogwert zuordnet, so daß dieser mit hoher Auflösung an das Steuergerät übertragen wird. Dies ist insbesondere dann sinnvoll, wenn der Analogwert die relative. Stärke des Magnetfeldes im Luftspalt ist. Durch ständige Übertragung des aktuell gewandelten Analogwertes können dynamische Veränderungen des Lufspalts erfaßt und zur Bestimmung von Fahrzuständen in einer Bremsen- und/oder Fahrdynamikregelung verwendet werden. Die Beobachtung des aktuellen Luftspalt kann auch als Maß für die auf das Rad einwirkende Querbeschleunigung oder der Radlagertemperatur herangezogen werden. Es weiterhin möglich, den erfindungsgemäßen Radsensor entsprechend einem an sich bekannten Seitenwand-Torsions-Sensor zu nutzen (Side-Wall-Torsion-Sensor, SWT), bei dem eine an/in der Seitenwand eines Luftreifens angebrachte magnetische Kodierung zur Messung der Reifentorsion und/oder der Querbeschleunigung durch einen Raddrehzahlsensor abgetastet wird.

In einer weiteren bevorzugten Ausführungsform wird das umschaltbare Protokoll dazu genutzt, aus dem Radlager gewonnene Zusatzinformationen, wie z.B. vektorielle Kraftkomponenten, nacheinander kürzestmöglich, wie zuvor beschrieben, über den externen Eingang K₅ an die ECU zu übertragen.

In einem Kraftfahrzeug mit mehreren Raddrehzahlsensoren kann es sinnvoll und zweckmäßig sein, wenn jeder Raddrehzahlsensor individuell einen Betriebsmodus einnimmt oder zugewiesen bekommt, welcher in Bezug auf die lokale Radgeschwindigkeit besonders geeignet ist.

Bevorzugt wird die maximale Länge des verwendeten Datenprotokolls, insbesondere die Anzahl an Bits, an die Winkelauflösung des Encoders so angepaßt, daß in einem unteren Geschwindigkeitsbereich von ca. 130 km/h stets die volle Länge des Datenprotokolls übertragen werden kann.

In einer weiteren bevorzugten Ausführungsform einer erfindungsgemäßen Anordnung wird die Auflösung des Encoders auf ca. 200 Inkremente pro Umdrehung erhöht (zum Beispiel durch Verdopplung der üblichen Anzahl von 100 Inkrementen) und die maximale Anzahl der Bit-Zusatzinformation auf 5 Bits reduziert.

In einer weiteren bevorzugten Ausführungsform der erfindungsgemäßen Anordnung wird die Auflösung des Encoders auf ca. 50 Inkremente pro Umdrehung verringert und die maximale Anzahl der Bit-Zusatzinformation auf 16 erhöht.

## Patentansprüche

1. Anordnung aus einem oder mehreren Raddrehzahlsensoren (1) und mindestens einem Steuergerät (ECU), wobei der/die Raddrehzahlsensor/-en mit dem Steuergerät über eine vorzugsweise aus zwei elektrischen Strompfaden bestehenden Datenschnittstelle (k1,k2,k3,k4) zur Übertragung von Raddrehzahlinformationen und Zusatzinformationen verbunden sind, wobei der Raddrehzahlsensor Mittel zum Senden von Drehzahlinformation über die Datenschnittstelle und Mittel zum Senden von Zusatzinformationen aufweist und wobei der Sensor mehrere zusätzliche Signalkanäle (t2...t10), die eine vorgegebene, jedoch ggf. veränderbare Anzahl haben, zur Übertragung der Zusatzinformationen über die Schnittstelle aufweist und jede Information einem Signalkanal und/oder einer festen Anzahl von Signalkanälen zugeordnet ist, **dadurch gekennzeichnet, daß** der Raddrehzahlsensor Umschaltmittel (10,11) umfaßt, mit denen durch Modusumschaltung eine Änderung der Zuordnung der Zusatzinformationen zu den verfügbaren Kanälen vorgenommen wird, wobei die Modusumschaltung nach dem Kriterium einer Aufforderung durch das Steuergerät erfolgt.

2. Anordnung nach Anspruch 1, **dadurch gekennzeichnet, daß** jeder Signalkanal zwei Zustände (z.B. "0" oder "1") übertragen kann.

3. Anordnung nach Anspruch 1 oder 2, **dadurch gekennzeichnet, daß** die Modusumschaltung in Abhängigkeit von der Raddrehzahl erfolgt.

4. Anordnung nach mindestens einem der Ansprüche 1 bis 3, **dadurch gekennzeichnet, daß** die Modusumschaltung in Abhängigkeit eines Zeitschemas erfolgt.

5. Anordnung nach mindestens einem der Ansprüche 1 bis 4, **dadurch gekennzeichnet, daß** die Signalkanäle Zeitfenster sind, welche in den Pulspausen zwischen aufeinanderfolgenden Raddrehzahlimpulsen liegen, deren Abstand drehzahlabhängig ist.

6. Anordnung nach mindestens einem der Ansprüche 1 bis 5, **dadurch gekennzeichnet, daß** das Umschaltmittel die Anzahl der in den Pulspausen übertragenen Signalkanäle ändert, insbesondere in Abhängigkeit von der Länge der Pulspausen.

7. Anordnung nach mindestens einem der Ansprüche 1 bis 6, **dadurch gekennzeichnet, daß** die Bit-Breite eines Wortes einer digitalisierten zu übertragenden Information erhöht wird, indem das Wort in Teilworte aufgeteilt wird, die einzelnen Teilworte nacheinander oder unmittelbar nacheinander zwischen den Pausen der Raddrehzahlimpulse übertragen werden und die Teilworte innerhalb des Steuergerätes wieder zum ursprünglichen Wort zusammengesetzt werden.

8. Anordnung nach Ansprüche 7, **dadurch gekennzeichnet, daß** die Anzahl der bei der Aufteilung des Wortes benötigten Teilworte oder die Tatsache an sich, daß eine Aufteilung vorgenommen wird, davon abhängig gemacht wird, welche Pausenlänge genutzt werden kann.

9. Anordnung nach mindestens einem der Ansprüche 1 bis 8, **dadurch gekennzeichnet, daß** die Modusumschaltung in Abhängigkeit der Veränderung des Signalzustandes in einem Kanal oder in einer Gruppe von Kanälen (z.B. Überschreiten oder Unterschreiten eines Wertes) erfolgt.

10. Anordnung nach mindestens einem der Ansprüche 1 bis 9, **dadurch gekennzeichnet, daß** die elektrische Energieversorgung des Raddrehzahlsensors über die Datenschnittstelle erfolgt.

11. Raddrehzahlsensor (1) **dadurch gekennzeichnet, daß** dieser Umschaltmittel nach mindestens einem der Ansprüche 1 bis 10 umfaßt.

## Claims

1. Arrangement comprising one or more wheel rotational speed sensors (1) and at least one control unit (ECU), wherein the wheel speed sensor(s) is/are connected to the control unit by way of a data interface (k1,k2,k3,k4) preferably composed of two electric current paths and used to transmit wheel speed information and additional information, wherein the wheel rotational speed sensor includes means for sending rotational speed information via the data interface and means for sending additional information, and wherein the sensor includes several additional signal channels (t2...t10) of a predetermined, however, optionally variable number for the transmission of the additional information via the interface, and each piece of information is allocated to a signal channel and/or a fixed number of signal channels,
**characterized in that** the wheel rotational speed sensor comprises switch-over means (10, 11) executing a change of the allocation of the additional information to the available channels by way of a mode switch-over, wherein the mode switch-over is executed according to the criterion of a request by the control unit.

2. Arrangement as claimed in claim 1,
**characterized in that** each signal channel can transmit two states (e.g. '0' or '1').

3. Arrangement as claimed in claim 1 or 2,
**characterized in that** the mode switch-over is executed in response to the wheel rotational speed.

4. Arrangement as claimed in at least any one of claims 1 to 3,
**characterized in that** the mode switch-over is executed in response to a time pattern.

5. Arrangement as claimed in at least any one of claims 1 to 4,
**characterized in that** the signal channels are time windows which lie in the pulse pauses between consecutive wheel speed pulses, the intervals between the latter being speed-responsive.

6. Arrangement as claimed in at least any one of claims 1 to 5,
**characterized in that** the switch-over means changes the number of the signal channels transmitted in the pulse pauses, in particular in response to the length of the pulse pauses.

7. Arrangement as claimed in at least any one of claims 1 to 6,
**characterized in that** the bit length of a word of a digitized information being transmitted is increased by splitting the word into part words, by transmitting the individual part words one after the other or directly one after the other between the pauses of the wheel speed pulses, and by putting the part words together again within the control unit to regain the original word.

8. Arrangement as claimed in claim 7,
**characterized in that** the number of the part words required when splitting up the words, or the fact per se that such split-up is made, is made contingent on which pause length can be used.

9. Arrangement as claimed in at least any one of claims 1 to 8,
**characterized in that** the mode switch-over takes place depending on the change of the signal state in a channel or in a group of channels (e.g. exceeding or falling below a value).

10. Arrangement as claimed in at least any one of claims 1 to 9,
**characterized in that** the electric energy supply of the wheel speed sensor takes place by way of the data interface.

11. Wheel rotational speed sensor (1),
**characterized in that** said sensor comprises switch-over means as claimed in at least any one of claims 1 to 10.

## Revendications

1. Dispositif constitué d'un ou de plusieurs capteurs de vitesse de rotation de roue (1) et d'au moins un appareil de commande (ECU), dans lequel le/les capteur(s) de vitesse de rotation de roue sont reliés à l'appareil de commande à travers une interface de données (k1, k2, k3, k4) constituée de préférence de deux voies de courant électrique, pour la transmission d'informations relatives à la vitesse de rotation de roue et d'informations supplémentaires, dans lequel le capteur de vitesse de rotation de roue comporte des moyens pour émettre une information de vitesse de rotation à travers l'interface de données et des moyens pour émettre des informations supplémentaires, et dans lequel le capteur comporte plusieurs canaux de signaux (t2...t10) supplémentaires qui ont un nombre prédéfini, mais le cas échéant variable, pour la transmission des informations supplémentaires à travers l'interface, et chaque information est associée à un canal de signaux et/ou à un nombre fixe de canaux de signaux, **caractérisé en ce que** le capteur de vitesse de rotation de roue comprend des moyens de commutation (10, 11), avec lesquels, par commutation de mode, il est procédé à une modification de l'attribution des informations supplémentaires aux canaux disponibles, la commutation de mode s'effectuant selon le critère d'une demande par l'appareil de commande.

2. Dispositif selon la revendication 1, **caractérisé en ce que** chaque canal de signaux peut transmettre deux états (par exemple "0" ou "1").

3. Dispositif selon la revendication 1 ou 2, **caractérisé en ce que** la commutation de mode s'effectue en fonction de la vitesse de rotation de roue.

4. Dispositif selon l'une au moins des revendications 1 à 3, **caractérisé en ce que** la commutation de mode s'effectue en fonction d'un schéma temporel.

5. Dispositif selon l'une au moins des revendications 1 à 4, **caractérisé en ce que** les canaux de signaux sont des fenêtres de temps qui se situent dans les pauses d'impulsions entre des impulsions successives de vitesse de rotation de roue, dont l'intervalle dépend de la vitesse de rotation.

6. Dispositif selon l'une au moins des revendications 1 à 5, **caractérisé en ce que** le moyen de commutation modifie le nombre de canaux de signaux transmis pendant les pauses d'impulsions, en particulier en fonction de la longueur des pauses d'impulsions.

7. Dispositif selon l'une au moins des revendications 1 à 6, **caractérisé en ce que** la largeur de bit d'un mot d'une information numérisée à transmettre est augmentée **en ce que** le mot est divisé en mots partiels, les différents mots partiels sont transmis les uns après les autres ou immédiatement les uns après les autres entre les pauses des impulsions de vitesse de rotation de roue et les mots partiels sont assemblés à nouveau pour former le mot initial, à l'intérieur de l'appareil de commande.

8. Dispositif selon la revendication 7, **caractérisé en ce que** le nombre de mots partiels nécessaire lors de la division du mot ou le fait qu'il est procédé à une division, dépend de la longueur de pause qui peut être utilisée.

9. Dispositif selon l'une au moins des revendications 1 à 8, **caractérisé en ce que** la commutation de mode s'effectue en fonction de la variation de l'état de signal dans un canal ou dans un groupe de canaux (par exemple dépassement ou sous-dépassement d'une valeur).

10. Dispositif selon l'une au moins des revendications 1 à 9, **caractérisé en ce que** l'alimentation en énergie électrique du capteur de vitesse de rotation de roue s'effectue à travers l'interface de données.

11. Capteur de vitesse de roues (1) **caractérisé en ce que** celui-ci comprend des moyens de commutation selon l'une au moins des revendications 1 à 10.
